# EUROPÄISCHE PATENTSCHRIFT

(11) **EP 0 703 534 B1**
(45) Veröffentlichungstag und Bekanntmachung des Hinweises auf die Patenterteilung: **02.05.2002**
(21) Anmeldenummer: 94114739.9
(22) Anmeldetag: 19.09.1994
(51) Int. Cl.: G06F 12/02

(54) **Speicherverwaltungssystem eines Rechnersystems**
Computer memory management system
Système de gestion de mémoire d'un ordinateur

(43) Veröffentlichungstag der Anmeldung: 27.03.1996
(73) Patentinhaber: SIEMENS AKTIENGESELLSCHAFT, 80333 München (DE)
(72) Erfinder: Krusche, Stefan Dr., Dipl.-Physy, D-85221 Dachau (DE); Lukas, Kirk Dipl.-Ing, D-82166 Lochham (DE); Sommer Herhard Dipl.-Ing., D-82065 Baierbrunn (DE)

(56) Entgegenhaltungen:
- EP-A- 0 453 093
- WO-A-94/02898
- US-A- 4 468 728
- IBM TECHNICAL DISCLOSURE BULLETIN., Bd.24, Nr.6, 1981, NEW YORK US Seiten 2710 - 2712 S. GONCHARSKY ET AL : 'Use of binary trees for storage allocation'
- COMPUTER JOURNAL, Bd.29, Nr.2, April 1986, CAMBRIDGE GB Seiten 127 - 134 N. PITMAN ET AL : 'Buddy Systems with Selective Splitting'
- PROCEEDINGS OF THE INTERNATIONAL CONFERENCE ON PARALLEL PROCESSING, 20. August 1985 Seiten 272 - 275 B. BIGLER ET AL : 'Parallel dynamic storage allocation'

## Beschreibung

Die Erfindung betrifft ein Speicherverwaltungssystem eines Rechnersystems

Speicherverwaltungssysteme von Rechnersystemen, insbesondere von Realzeitsystemen, sollen kurze Zugriffszeiten und hohe Belegungsdichten gewährleisten. Außerdem stellen Datensicherheit und Verfügbarkeit weitere wesentliche Anforderungen an solche Speicherverwaltungssysteme dar.

Ein Speicherverwaltungssystem zum Verwalten eines Pools von Daten variabler Länge verwaltet den von ihm verwalteten Speicherraum in Form von Speicherblöcken unterschiedlicher Länge. Die Länge der einzelnen Speicherblöcke ergibt sich aus der Folge von Speicheranforderungen und Speicherfreigaben. Frei werdende Teilstücke werden mit angrenzenden freien Teilstükken vereinigt (smelting).

Zur Durchführung der Aufgaben bedient sich das Speicherverwaltungssystem in der Regel einer Belegtliste und einer Freiliste. Bei der Vergabe von Speicher sind verschiedene Verfahren zum Durchsuchen der Freiliste bekannt.

Beim sog. first-fit-Verfahren wird mit der Suche am Beginn des zu verwaltenden Speicherraums begonnen und der erste längenmäßig ausreichende Block dem Anwender zugeordnet.

Bei dem sog. next-fit-Verfahren wird dem Anwender ebenfalls der erste längenmäßig ausreichende Block zugeordnet jedoch wird mit der Suche bei demjenigen Block begonnen, der zuletzt einem Anwender zugeteilt wurde.

Bei dem sog. best-fit-Verfahren wird so lange gesucht bis derjenige Block gefunden wird, der den geringsten Verschnitt(kleinstmöglicher Block, der längenmäßig ausreicht)aufweist.

Als Alternative zur Speicherverwaltung mit einer Belegtliste und einer Freiliste bietet sich das sog. Buddyverfahren an. Das Buddyverfahren benötigt zur Verwaltung von 2ⁿ Byte Speicher n Freilisten. In der k-ten Liste werden die freien Blökke der Größe 2^{k} verwaltet. Wenn nun ein Speicherbereich der Länge m angefordert wird, wird der kleinste freie Block, der größer ist als m, so lange halbiert, bis eine weitere Halbierung einen Block kleiner als m ergeben würde. Einer der beiden Blöcke, die bei der letzten Halbierung entstanden sind, wird belegt. Die übrigen bei den Halbierungen entstandenen Blöcke werden in die jeweiligen Freilisten eingetragen. Bei der Freigabe eines Blocks werden jeweils Blöcke so lange verschmolzen, bis ein weiteres Verschmelzen nicht mehr möglich ist, weil beispielsweise die zweite Hälfte belegt ist. Dieses Smelting ist aber vergleichsweise unwahrscheinlich, da als Voraussetzung dazu gerade zwei gleich große Blöcke nebeneinander frei sein müssen. Damit besteht die Tendenz, daß im laufenden Betrieb insbesondere größere, also ohnehin seltene Blöcke nicht mehr effizient verwaltet werden.

Das Buddy-System hat also den Nachteil, daß es den Speicher zwischen der tatsächlichen Anforderung und der nächsthöheren Zweierpotenz ungenutzt läßt.

Ein weiterer Nachteil des buddy-Systems besteht in einer sicherheitskritischen Verwaltungsstruktur, da zur Belegung eines Blocks einer "kleinen" Größe unter Umständen sehr viele Splittings und damit kritische Umkettungen in den Freiketten nötig sein können. Insbesondere zu Beginn der Belegung ist dies der Normalfall.

Der Nachteil des best-fit-Verfahrens besteht in relativ langen Suchzeiten und häufigem Splitting/Smelting.

Der Nachteil des first-fit-Verfahrens besteht in häufigem Splitting/Smelting und einer zu geringen Belegungsdichte.

Eine weitere Alternative für die Verwaltung des Freispeichers an Stelle einer Liste ist ein nach Blocklängen sortierter dynamischer Baum, dessen einzelne Knoten die jeweiligen Verwaltungsdaten eines Blockes aufnehmen. Der wesentliche Vorteil dieser Art der Freispeicherverwaltung ist ein schneller Best-Fit-Zugriff beim Suchen eines freien Blockes. Gleichzeitig hat diese Art der Verwaltung jedoch folgende gravierende Nachteile:
- Um den genannten Vorteil längerfristig gewährleisten zu können, wäre eine regelmäßige Rebalancierung des Baums erforderlich.
- Im allgemeinen zöge eine Anforderung bzw. Freigabe eines Speicherblocks (oder ggf. mehrerer Blöcke) eine Rebalancierung des Baumes nach sich. Während dieser Zeit müßte der Zugriff auf die Freispeicherverwaltung gesperrt werden.
- Durch das notwendige Rebalancieren würde die Gesamtstruktur häufig in größerem Maße manipuliert, wodurch die Wahrscheinlichkeit für Verkettungsfehler stark ansteigen würde. Zum Ausgleich wäre eine erhöhte Auditierung notwendig.
- Aus Gründen der Datensicherheit müßte der dynamische Baum semipermanent gehalten werden. Damit würde jeder bei einer Rebalancierung veränderte Header als eine Location im mit der entsprechenden Transaktion verknüpften Disk-Notebook auftreten.
- Das Speicherverwaltungssystem soll gegenüber einer möglichen Erweiterung mit einer garbage collection offen gehalten werden. Im Falle einer dynamischen Baumstruktur würden die mit der garbage collection verbundenen Speicherumwälzungen zu erheblichen Umkettungen innerhalb des Baumes führen, was wiederum zu den bereits genannten Problemen führen würde.
- Als grundsätzliches Problem einer auf Best-Fit-Suche basierenden Freispeicher-Verwaltung würde eine Häufung kleiner, relativ unbrauchbarer Blöcke auftreten, die sich durch Absplitten (Blocksplitting) als Rest bei einer vorausgegangenen Auswahl "etwas" zu großer Blöcke ergäbe.

Aus dem Dokument WO 94/02898 ist des weiteren ein Speicherverwaltungssystem bekannt, das zur Verwaltung freier Speicherblöcke eine statische Baumstruktur mit Knoten benutzt, wobei ein Knoten jeweils die Wurzel eines Unterbaumes darstellt und als Auswahl-Information jeweils die Blocklänge des größten freien Speicherblockes enthält, der über den Knoten bzw. Unterbaum gefunden werden kann. Die Auswahlinformation muß immer dann angepaßt werden, wenn der unter einem Knoten auffindbare Block maximaler Größe belegt worden ist. Die Anpassung bedeutet Schreibvorgänge im Knoten und damit einen Verringerrung der Sicherheit der Baumstruktur. Des weiteren ist die Suche über einen Baum gemäß D1 hinsichtlich der Suchschritte und damit der Zugriffszeit nicht determinierbar.

Der Erfindung liegt die Aufgabe zugrunde, ein Speicherverwaltungssystem zum Verwalten eines Pools von Daten variabler Länge anzugeben, das kurze und determinierbare Zugriffszeiten ermöglicht, ohne die Datensicherheit und Verfügbarkeit zu beeinträchtigen.

Durch die statische Baumstruktur in Verbindung mit einer festen Vorgabe der über die Knoten zugänglichen Spektren von Blocklängen wird eine kurze und determinierbare Zugriffszeit auf die freien Speicherblöcke erreicht. Gleichzeitig werden dadurch fehlerbedingte Veränderungen der Baumstruktur oder des Informationsgehalts der Baumstruktur während des Betriebs des Realzeitsystems ausgeschlossen. Dadurch ist Datensicherheit und ständige Verfügbarkeit gewährleistet.

Eine Ausgestaltung der Erfindung ist durch Anspruch 2 angegeben. Durch die Einführung einer Granularität, d.h. die statische Aufprägung von bestimmten Blocklängen, wird zum einen die Belegungsdichte gegenüber dem reinen best-fit-Verfahren effektiv weiter erhöht, da die für das best-fit-Verfahren typische Anhäufung unbrauchbar kleiner split-Reste vermieden werden, zum anderen wird wegen des gegenüber dem best-fit-Verfahren weniger häufig erforderlichem Splitting und Smelting die Zugriffszeit verkürzt.

Eine weitere Ausgestaltung der Erfindung ist durch Anspruch 3 angegeben. Durch die Ausgestaltung der statischen Suchstruktur als binärer Baum erfolgt der Zugriff auf die Blätter des Baumes in Form eines binären Suchens. Dadurch ist die Suche sehr schnell.

Eine weitere Ausgestaltung der Erfindung ist durch Anspruch 4 angegeben. Durch die Ausgestaltung in mehrere Baumebenen kann bei der Suche nach einem passenden Block bereits am Endeknoten der ersten Baumebene erkannt werden, ob der über den Endeknoten zugängliche Unterbaum leer ist. Trifft man bei der Suche auf einen solchen leeren Unterbaum, so kann direkt auf einen anderen Unterbaum verwiesen werden, ohne daß die Struktur des leeren Unterbaums bis zu dessen Endeknoten durchlaufen werden muß. Dadurch wird die durchschnittliche Zugriffszeit weiter erhöht.

Eine weitere Ausgestaltung der Erfindung ist durch Anspruch 5 angegeben. Durch diese Ausgestaltung wird gewährleistet, daß einerseits bei der Zuteilung eines Blockes kein Speicherraum verschenkt wird(optimale Belegungsdichte!) und andererseits die Baumstruktur dennoch ausgeglichen bleibt(optimale Zugriffszeit!).

Eine weitere Ausgestaltung der Erfindung ist durch Anspruch 6 angegeben. Durch diese Ausgestaltung wird gewährleistet, daß nach einem Block-Splitting wieder ein brauchbarer Restblock in die Verwaltungsstruktur eingehängt wird. Dies bewirkt ebenfalls eine ausgeglichene Baumstruktur und somit eine minimale Zugriffszeit.

Eine weitere Ausgestaltung der Erfindung ist durch Anspruch 7 angegeben. Durch diese Ausgestaltung wird eine im Rahmen einer Anforderung entdeckte leere Blocklänge sofort, d.h. noch im Rahmen dieser Anforderung, wieder mit Blöcken aufgefüllt.

Eine weitere Ausgestaltung der Erfindung ist durch Anspruch 8 angegeben. Durch diese Ausgestaltung wird es ermöglicht Ausgleichsmechanismen einzuleiten, die den Füllgrad von Behälterstrukturen gezielt nur im Bedarfsfall beeinflussen, um so auf eine ausgeglichene Baumstruktur hinzuwirken. Außerdem kann dadurch während des Betriebs ein anwenderspezifisches Blocklängenprofil erstellt werden, nach der die Unterteilung der Längenintervalle einer auf diese Anwendung angepaßten neuen Verwaltungsstruktur festgelegt werden können.

Weitere Ausgestaltungen der Erfindung sind durch Anspruch 9 und 10 angegeben. Durch diese Ausgestaltungen werden spezielle Ausgleichsmechanismen zum Ausgleich der Baumstruktur, die auf dem durch die Registriereinrichtung bekannten Füllgrad basieren, angegeben.

Eine weitere Ausgestaltung der Erfindung ist durch Anspruch 11 angegeben. Diese Ausgestaltung gewährleistet, daß die Baumstruktur optimal an die Anwendung angepaßt ist und die Zugriffszeit damit minimal bleibt.

Eine weitere Ausgestaltung der Erfindung ist durch Anspruch 12 angegeben. Nach dieser Ausgestaltung ist das Speicherverwaltungssystem in zwei Untersysteme strukturiert. Diese Unterstrukturierung ermöglicht es, daß die aus Gründen der Datensicherheit auf einem Hintergrundspeicher zu führenden Abbilder auf die belegten Blöcke beschränkt bleiben.

Eine weitere Ausgestaltung der Erfindung ist durch Anspruch 13 angegeben. Durch diese Ausgestaltung ist man in der Lage eine neue Verwaltungsstruktur in das Speicherverwaltungssystem einzubringen, die der Anwendung besser angepaßt ist und dadurch die mittlere Suchzeit verringert. Diese Ausgestaltung ist insbesondere in Verbindung mit der Registriereinrichtung nach Anspruch 8 vorteilhaft.

Im folgenden wird ein Ausführungsbeispiel der Erfindung anhand der Zeichnung näher erläutert.

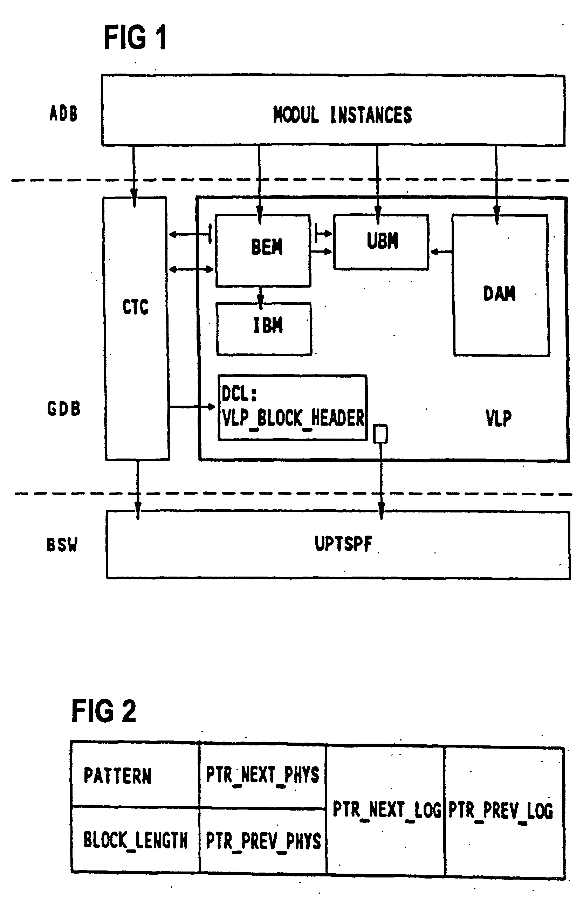

FIG 1 zeigt die Struktur eines Speicherverwaltungssystem VLP, das ein Freiverwaltungssystem IBM, ein Belegtverwaltungssystem UBM, ein Blockzustandssteuerungssystem BEM und ein Zugriffssteuerungssystem DAM umfaßt.

Das Speicherverwaltungssystem VLP stellt einem Anwendersystem, z.B. den Datenmodulen(modul instances) eines Datenverwaltungssystem, einen Pool von Speicherblöcken variabler Länge zur Verfügung. Das Freiverwaltungssystem IBM verwaltet dabei die freien Blöcke und das Belegtverwaltungssystem UBM verwaltet die von einem Anwendersystem bereits belegten (benutzten) Speicherblöcke.

Das Belegtverwaltungssystem UBM verwaltet die belegten Speicherblöcke anhand einer Liste, der sogenannten Belegtblockliste. Die Belegtblockliste dient in erster Linie dazu, die vom Speicherverwaltungssystem verwalteten Daten eines Anwendersystems einzukapseln. Alle Zugriffe eines Anwendersystems auf einen von ihm belegten Speicherblock erfolgen somit über die Belegtblockliste, die die Verknüpfung des vom Anwendersystem benutzten logischen Indexes mit einer physikalischen Adresse des Speicherblocks beinhaltet (das Anwendersystem hat den zur Adressierung benutzten logischen Index vorher vom Belegtspeichersystem auf Anforderung erhalten und daraufhin durch Übergabe des logischen Indexes an das Freispeicherverwaltungssystem dieses veranlaßt, einen freien Speicherblock zu finden und reservieren zu lassen).

Das Freiverwaltungssystem IBM verwaltet - wie bereits erwähnt - die freien Speicherblöcke des Speicherverwaltungssystems. Es behandelt dabei die Suche nach einem angeforderten Speicherblock, das durch eine Anforderung eines Speicherblocks möglicherweise nötige Splitting und das nach einer Freigabe eines Speicherblocks möglicherweise nötige Smelting. Die Suche nach einem angeforderten Speicherblock erfolgt über eine Verwaltungsstruktur, die einen statisch vorgeleisteten, nach Längen sortierten binären Baum enthält, dessen Blätter die Einstiegspunkte in Ketten von freien Speicherblöcken gleicher Größe darstellen.

Bei einer Variante können vor der Aktivierung (Inbetriebnahme) der Verwaltungsstruktur die genannten Ketten des binären Baumes bereits mit Blöcken vorgefüllt sein, d.h. der Freispeicher bereits aufgeteilt sein. Bei einer anderen Variante können die Ketten vor der Aktivierung noch leer sein und erst nach der Aktivierung der Verwaltungsstruktur durch Vorgänge während des Betriebs, wie z.B. Freigabe, Splitting oder Smelting von Blöcken, gefüllt werden.

Die Blockzustandssteuerung BEM steuert den Zustandswechsel eines Speicherblocks zwischen dem Zustand "Belegt" und "Frei" und damit den verwaltungsmäßigen Wechsel eines Blocks zwischen der Belegtverwaltung und der Freiverwaltung.

Das Zugriffssteuerungssystem DAM steuert den Zugriff auf den Dateninhalt eines belegten Speicherblocks, indem es einem Anwendersystem die notwendigen Schnittstellenprimitiven zur Verfügung stellt.

Wird das dargestellte Speicherverwaltungssystem VLP im Rahmen eines Multitasking-Systems genutzt, ist eine gegenseitige Absicherung parallel zueinander stattfindender Zugriffe auf das Speicherverwaltungssystem notwendig. Darüber hinaus müssen die in eigenen Prozessen stattfindenden Schreibzugriffe auf den Hintergrundspeicher mit den Zugriffen auf das Speicherverwaltungssystem synchronisiert werden. Diese Konkurrenzkontrolle und die Gewährleistung, daß auch im Laufe von mehreren, logisch zusammengehörenden Zugriffen, die als eine Transaktion bezeichnet werden, ein dazu logisch konsistenter Zustand des Speicherverwaltungssystems zur Verfügung steht, gewährleistet ein Zugriffssteuerungssystem CTC.

Die zu verwaltenden elementaren Einheiten des Speicherverwaltungssystems sind die Speicherblöcke. Ein Speicherblock ist im wesentlichen charakterisiert durch seinen Platz im Speicher, seine Länge und seinen Zustand. Diese und einige zusätzliche Informationen werden in Speicherblock-Headern BLK-H zusammengefaßt, die die zentralen Verwaltungsstrukturen des Speicherverwaltungssystems darstellen.

FIG 2 zeigt die Struktur eines Speicherblock-Headers BLK-H.

Ein Datenfeld PATTERN wird genutzt, um den Status des zugehörigen Speicherblockes einzutragen. Die möglichen Zustände sind "Frei", "Benutzt" und "Reserviert", wobei die beiden erstgenannten Zustände selbsterklärend sind und der Zustand "Reserviert" den Übergang zwischen diesen beiden Zuständen kennzeichnet.

Das Datenfeld LENGTH dient der Angabe der Länge des Speicherblocks, wobei die Angabe in Vielfachen der minimalen Blocklänge ausgedrückt wird.

Die beiden Zeiger PTR_NEXT_PHYS und PTR_PREV_PHYS verketten physikalisch im Speicher benachbarte Blöcke. Diese Angaben sind für die eigentliche Speicherverwaltung nicht von Bedeutung, jedoch zur Überwachung der Integrität des Speicherverwaltungssystems wichtig. Durch die beiden Zeiger kann nämlich sichergestellt werden, daß bei Umkettungen zwischen der Frei-/Besetztspeicherverwaltung IBM, UBM verlorengegangene Blöcke wiedergefunden und unter Umständen der gewünschte Zustand restauriert werden kann.

Die beiden Zeiger PTR_NEXT_LOG und PTR_PREV_LOG stellen den Bezug zum logischen Nachfolger bzw. Vorgänger des jeweiligen Blocks her. Ihre konkrete Bedeutung ist abhängig vom momentanen Zustand des Blocks (siehe Datenfeld PATTERN). Solange ein Block der Freiverwaltung IBM zugeordnet wird, ist er in eine doppelt verkettete Liste von Blöcken gleicher Größe eingebunden, wobei der Zeiger PRT_NEXT_LOG des letzten Blocks in jeder Kette auf die Wurzel dieser Kette zurückverweist. Enthält der Block Nutzdaten, so wird er über eine zentrale Schlüsseltabelle angesprochen. Der Rückwärtsverweis durch den Zeiger PTR_PREV_LOG zeigt dann auf den entsprechenden Eintrag.

Der Zeiger für den logischen Vorwärtsverweis kann für belegte Blöcke eine zur Auditierung vorgesehene Checksumme aufnehmen. Sollte es nötig sein, logisch zusammenhängende Daten über mehrere Blöcke zu verteilen, dient dieser Zeiger des weiteren zur Adressierung der Folgeblöcke und erst im letzten Block befindet sich dann die Checksumme.

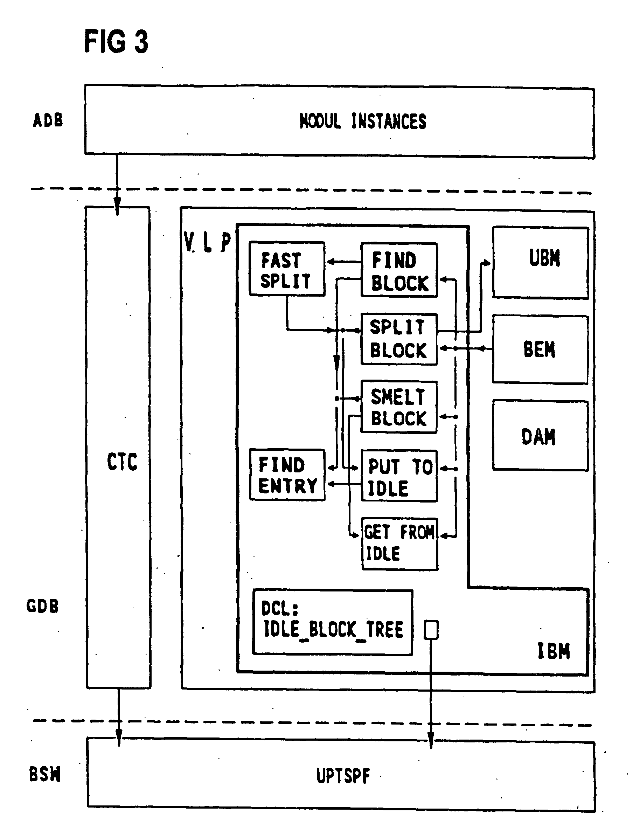

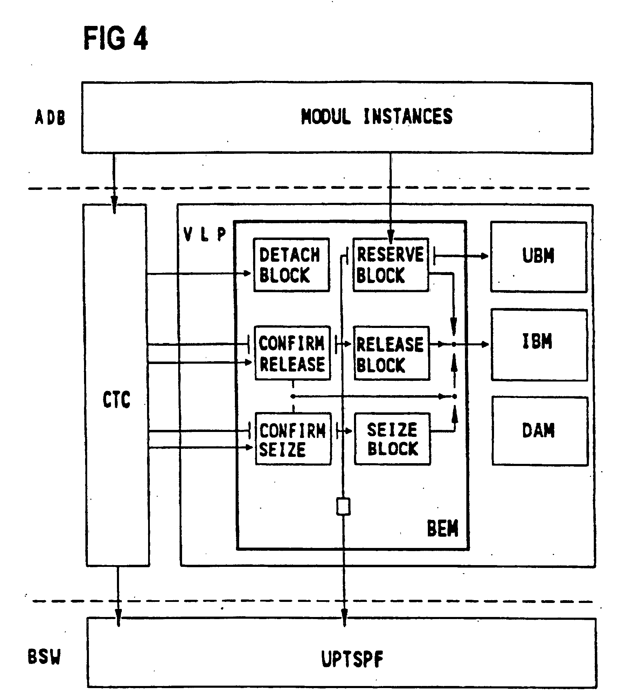

Im folgenden wird die Arbeitsweise der Speicherverwaltung VLP anhand der in den FIG 3 und 4 dargestellten Primitiven der Speicherverwaltung näher beschrieben.

Die Primitiven haben in Verbindung mit der vorhergenannten Verwaltungsstruktur des Block-Headers BLK-H die Aufgabe, die physikalische Verwaltung der Speicherblöcke zu realisieren und diese für die Anwender des Speicherverwaltungssystems unsichtbar zu machen. Es soll hierbei zwischen externen und internen Primitiven unterschieden werden, wobei erstere sich durch eine nach außen, d.h. gegenüber einem Anwendersystem, bekannte Schnittstelle auszeichnen, während letztere lediglich funktionale Einheiten darstellen, deren Ausführung im Bedarfsfall implizit angestoßen, also im Rahmen einer externen Primitive genutzt wird.

Zunächst werden die internen Primitiven näher erläutert, da sich die externen Primitiven auf diese abstützen.

Die internen Prozeduren sind in FIG 3 dargestellt und in der Freiverwaltung IBM enthalten. Wird die Freiverwaltung geändert, so beschränken sich die implementierungsbedingten Auswirkungen lediglich auf diesen Satz von Primitiven.

Eine Prozedur FIND_ENTRY sucht einen Beginn ENTRY einer Kette von Blöcken vorgegebener Größe. Diese Primitive dient lediglich als Baustein zwei im folgenden noch zu erläuternde Primitiven FIND_BLOCK und PUT_TO_IDLE.

Die Prozedur FIND_BLOCK sucht einen Block der vorgegebenen Größe. Der detailliertere Ablauf des Suchalgorithmus wird später beschrieben. Im günstigsten Fall wird von dieser Primitive ein passender Block gefunden (und zwar in der mit Hilfe der Primitive FIND_ENTRY gefundenen Kette), ansonsten wird ein möglichst geschickt gewählter zu großer Block ausgewählt, das PATTERN unterbrechungsfrei auf den Zustand "Reserviert" gesetzt und, im Falle eines "zu großen" Blocks, mit dem entsprechenden Vermerk der Verweis auf diesen Block bekanntgegeben.

Die Prozedur PUT_TO_IDLE unterstellt einen Block der Freiverwaltung. Zunächst werden die physikalischen Nachbarn des freizustellenden Blocks auf ihren Zustand überprüft. Findet sich dabei ein freier Nachbar, so wird dies der BEM bekanntgegeben. Findet sich kein freier Nachbar - und nur dann! - wird der freie Block am Ende einer mit Hilfe der Primitive FIND_ENTRY gefundenen Doppelkette eingehängt und das PATTERN auf "FREE" geändert.

Eine primitive GET_FROM_IDLE entnimmt einen Block aus der Freiverwaltung. Dazu muß dieser Block in geeigneter Weise aus einer Verwaltungskette ausgegliedert und das PATTERN des Block-Headers auf "USED" gesetzt werden. Die Entnahme erfolgt am Beginn der Kette.

Eine Prozedur SPLIT_BLOCK spaltet von einem Block einen Teil vorgegebener Größe ab. Dazu muß ein neuer Block-Header BLK-H angelegt und die Verknüpfung mit den physikalischen Nachbarn aktualisiert werden.

Eine primitive SMELT_BLOCK vereinigt zwei physikalisch benachbarte Blöcke. Der überschüssige Block-Header kann aufgegeben werden und die Verknüpfungen mit dem physikalischen Nachbarn müssen aktualisiert werden.

Im folgenden werden die externen Primitiven näher erläutert, die in der Blockzustandssteuerung BEM und der Zugriffssteuerung DAM enthalten sind. FIG 4 zeigt die in der BEM enthaltenen Primitiven.

Eine Primitive RESERVE_BLOCK läßt einen freien Block suchen und belegt diesen für die zugehörige Transaktion, indem sie das PATTERN auf den Zustand "RESERVED" setzt. Hinsichtlich der Funktionalität basiert diese Primitive auf der Primitive FIND_BLOCK. Wird dabei auf einen Reserve-Block des Speicherverwaltungssystems zugegriffen, muß sofort ein SPLIT_BLOCK mit implizitem PUT_TO_IDLE ausgeführt werden.

Eine Primitive SEIZE_BLOCK entnimmt einen zuvor reservierten Block aus der Freiverwaltung und bringt ihn, falls nötig, durch Block-Splitting auf die tatsächlich benötigte Länge. Der Rest-Block wird wieder an die Freiverwaltung zurückgegeben. Funktional wird also zuerst ein GET_FROM_IDLE und dann ggf. ein SPLIT_BLOCK ausgeführt.

Eine Primitive RELEASE_BLOCK gibt einen nicht mehr benötigten Block an die Freiverwaltung zurück. Falls ein freier Nachbar vorhanden ist, wird ein Block-Smelting angestoßen und statt dem ursprünglichen Block der zusammengefaßte Block eingekettet. Drückt man diesen Sachverhalt durch die dabei implizit verwendeten internen Primitiven aus, so erfolgt zuerst ein PUT_TO_IDLE. Findet diese Primitive einen freien Nachbarn, so wird nicht sofort eingekettet, sondern zunächst ein SMELT_BLOCK und anschließend noch einmal ein - dann "aktives" - PUT_TO_IDLE aufgerufen.

Wird im Falle einer Multitasking-Umgebung des VLP eine Transaktion im Zuge eines RESERVE_BLOCK mangels kleinerer, passenderer Blöcke auf den großen Restblock, die Freispeicher-Reserve geführt, so darf nicht die gesamte Reserve blockiert werden. In diesem Fall muß also das Block-Splitting sofort durchgeführt werden. Ansonsten ist es sinnvoll, das Block-Splitting erst mit Abschluß einer Transaktion zu vollziehen, um so den Aufwand im Falle eines auftretenden Fehlers und des dann zu vollziehenden Roll-backs, d.h. der Wiederherstellung des Zustandes vor Beginn der Transaktion, zu minimieren.

Wie aus FIG 3 ersichtlich, werden die Primitiven der Freiverwaltung von der Blockzustandssteuerung BEM aufgerufen. Die Suche nach einem freien Speicherblock wird durch die Primitive FIND_BLOCK durchgeführt, die implizit die Primitive FIND_ENTRY aufruft, um in einem ersten Schritt eine passende Verwaltungskette mit einem freien Bock zu finden, und die ebenfalls implizit die Primitive FAST_SPLIT aufruft, um gegebenenfalls ein schnelles Splitting durchzuführen.

Der Zugriff zu den Verwaltungsketten für freie Speicherblöcke erfolgt über die Primitiven PUT_TO_IDLE und GET_FROM_IDLE, wobei die erstgenannte Primitive wiederum die Primitive FIND_ENTRY aufruft, um die richtige Kette zu finden.

Das Splitting durch die Primitive SPLIT_BLOCK und das Verschmelzen durch die Primitive SMELT_BLOCK wird ebenfalls durch die Blockzustandssteuerung initiiert, und zwar nach dem Aufdatieren der verursachenden Transaktion, wodurch das Zurückrollen zum Zustand vor der Transaktion im Falle einer Unterbrechung gewährleistet wird.

Die DAM enthält die Prozeduren Write-Block und Read-Block. Die Primitive WRITE_BLOCK schreibt Anwender-Daten, ebenfalls unter zusätzlicher Verwendung der genannten UPDATE-Prozedur, in einen zuvor reservierten Block. Die Prozedur Read-Block liest Anwenderdaten aus einem reservierten Block.

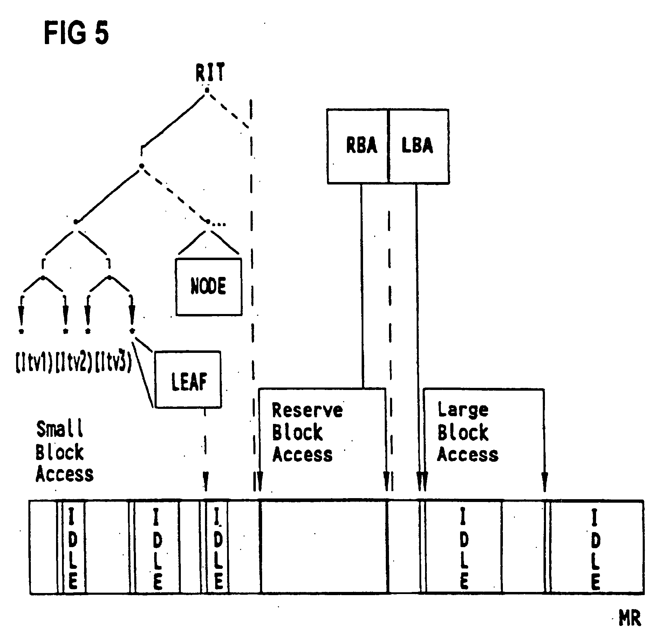

Im folgenden wird anhand von FIG 5 die wesentliche Datenstruktur der Freiverwaltung, nämlich die Verwaltungsstruktur, durch die der Zugang zu den freien Blöcken des Speicherverwaltungssystems organisiert wird, näher erläutert.

Die Verwaltungsstruktur kann in drei Teile geteilt werden, nämlich eine erste Zugriffsstruktur RIT, die zu "kleinen" Blöcken führt, eine zweite Zugriffsstruktur LBA, die zu "großen" Blöcken führt und eine dritte Zugriffsstruktur RBA, die zu einem Reserveblock führt. Während die zweite und dritte Zugriffsstruktur nur einige Zeiger enthält, enthält die erste Zugriffsstruktur einen statischen binären Baum.

Die Struktur des genannten statischen binären Baumes basiert auf der Vorgabe, daß - zumindest für "kleine" Blöcke - nur Blocklängen mit diskreten Werten, d.h. vielfachen einer bestimmten minimalen Blocklänge, erlaubt sind. Jedes Blatt (Leaf) des binären Baumes adressiert dann eine Kette von Blöcken mit derselben Länge, wobei die Blätter über Knoten (Nodes) nach der jeweiligen Länge der Blöcke sortiert sind.

Durch die genannten Zugriffsstrukturen wird, abgesehen von der Einschränkung durch die Granularität, eine nahezu best-fit-Suche gewährleistet. Aufgrund der binären Baumstruktur wird außerdem ein sehr schneller Zugriff gewährleistet. Der Verlust von freiem Speicherraum, der durch die eingeführte Granularität bedingt ist, wird um ein vielfaches durch ein verbessertes Verhältnis zwischen belegtem und freiem Speicherraum kompensiert.

Der Zugriff zu einer Kette von "großen" Blöcken erfolgt, wie bereits erwähnt über eine separate, zweite Zugriffsstruktur. Die genannte Kette von "großen" Blöcken befindet sich am Ende des vom VLP verwalteten Speicherraums MR, wobei die Auswahl nach einer best-fit-Suche erfolgt. Da man davon ausgehen kann, daß die genannte Kette ziemlich kurz ist, wird das Durchlaufen der Kette während einer Suche in einer akzeptablen Zeit erfolgen.

Im Unterschied zu den genannten "großen" Blöcken sind die "kleinen" Blöcke am Beginn des vom Speicherverwaltungssystem verwalteten Speicherraums MR angesiedelt. Auch in dem Speichergebiet der "kleinen" Blöcke ist es möglich, Blöcke zu verschmelzen und so die über die erste Zugriffsstruktur maximale direkt adressierbare Blocklänge zu überschreiten. Deshalb enthält das letzte Blatt des binären Baums in der Regel nicht nur Blöcke der angegebenen Blocklänge, sondern auch alle größeren Blocklängen, die durch einen Verschmelzungsprozeß entstanden sind.

Die Verwaltung für den Reserveblock (dritte Zugriffsstruktur RBA) enthält zwei Zeiger auf den Beginn und das Ende des Reserveblocks sowie zwei weitere Zeiger, die einen gerade gesplitteten Block am Beginn bzw. am Ende des Reserveblocks adressieren, um ein schnelles Splitting und Smelting zu unterstützen.

Die Verwaltung der "großen" Blöcke (zweite Zugriffsstruktur LBA) umfaßt zwei Zeiger zum Beginn bzw. zum Ende der Kette von "großen" Blöcken.

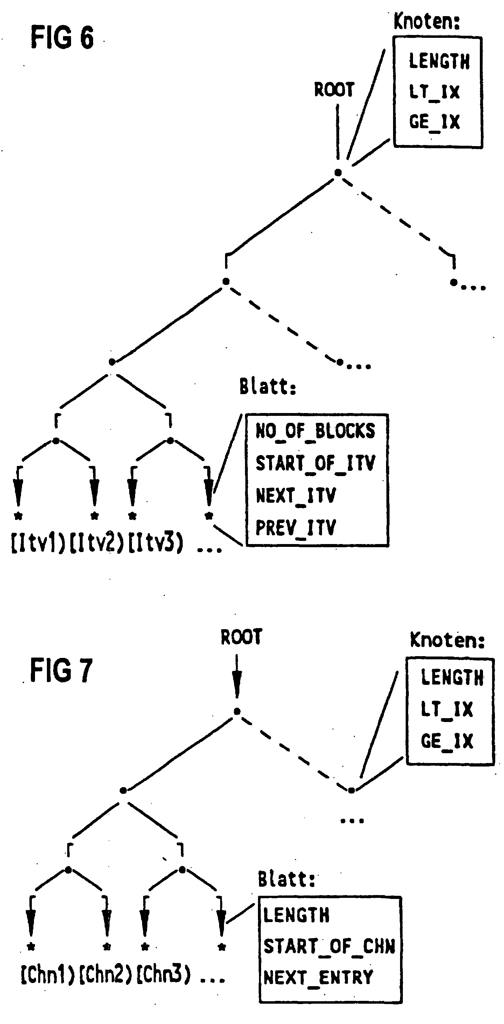

FIG 6 zeigt nochmals die erste Zugriffsstruktur, nämlich einen statisch vorgeleisteten, nach Längen sortierten binären Baum, dessen Blätter die Einstiegspunkte in Ketten von freien Blöcken gleicher Größe bereitstellen. Der binäre Baum ist zur Optimierung der Dynamik in zwei Ebenen unterteilt (in FIG 5 nicht dargestellt), nämlich in einen Hauptbaum (siehe FIG 6) und in Unterbäume (siehe FIG 7).

Der Hauptbaum unterteilt ein vorgegebenes Blocklängenprofil des Freispeichers grob in Blocklängen-Intervalle ITV, während die Unterbäume(zweite Ebene) die Intervalle in diskrete Blocklängen unterteilen, wobei die Blätter der Unterbäume den Einstieg in Ketten Chn von Blöcken gleicher Länge bieten. Die von dieser Baumstruktur unterstützten Blocklängen sind statisch vorgegeben und ziehen eine gewisse Granularität und eine zu definierende minimale Blocklänge nach sich. Diese scheinbare Einschränkung erweist sich als sehr vorteilhaft, was im folgenden bei der Erläuterung der Strukturen und ihrer Funktionalität näher erläutert wird.

Die Anzahl der Intervalle ergibt sich aus dem Verhältnis zwischen einer Obergrenze, ab der alle Blöcke unspezifisch als "groß" behandelt werden, und der gewünschten Granularität in der Unterteilung.

Im Rahmen dieser Granularität wird eine "quasi"-best-fit-Suche unterstützt. Die sich zunächst durch die Einführung einer Granularität notwendigerweise ergebenden Speicherplatzverluste werden einerseits direkt durch eine erhöhte Belegungsdichte (die gestaffelten Größen passen besser ineinander) überkompensiert, andererseits resultiert aus der geringeren Anzahl der benötigten Splittings ein besseres Systemverhalten insgesamt.

Die Unterteilung des Freispeichers in Längenintervalle ITV kann äquidistant erfolgen, oder, bezogen auf eine spezielle Anwendung, entsprechend der Verteilung des Längenprofils der Anwendung(anwenderspezifische Anforderungshäufigkeit von Blocklängen). Wählt man bspw. ein bestimmtes Intervall im Vergleich zu anderen Intervallen sehr schmal, so werden in diesem Intervall nur wenige diskreten Blocklängen liegen und der dieses Intervall unterteilende Unterbaum wird somit im Vergleich zu den Unterbäumen der anderen Intervalle eine geringe Tiefe aufweisen. Dadurch wird die Anzahl der Suchschritte für Blocklängen, die in diesem Intervall liegen geringer und der Zugriff somit schneller. Für häufig angeforderte Blocklängen kann man auf diese Weise also die Zugriffszeit verkürzen. Unabhängig von der letztendlich gewählten Unterteilung ist das letzte Intervall offen zu wählen, da es alle Blöcke oberhalb des Maximalwerts des angenommenen Langenprofils enthält.

Die Knoten des Baumes in FIG 6 enthalten die für jeden binären Baum typischen Informationen, nämlich eine Vergleichslänge LENGTH, die bei der Suche jeweils mit der angeforderten Blocklänge verglichen wird, sowie einen Kleiner-als-Verweis LT_IX und einen Größer-gleich-Verweis GE_IX (GE = greater or equal) auf die beiden Nachfolgeknoten/-Blätter.

Die Blätter des Baumes in FIG 6 enthalten Felder für die Gesamtzahl der aktuell in diesem Intervall verfügbaren Blöcke (NO_OF_BLOCKS), einen Verweis zum Einstieg in eine intervall-interne Verwaltungsstruktur (START_OF_ITV) und, um den Fall eines "leeren" Intervalls (NO_OF_BLOCKS=0) abzufangen, zwei weitere Verweise (NEXT_ITV, PREV_ITV) zu den den nächsthöheren/niedrigeren Intervallen zugeordneten Nachbarblättern.

Nimmt man eine Unterteilung in 2ⁿ Intervalle an, so müssen für den Hauptbaum 2ⁿ Blätter und 2ⁿ - 1 Knoten, jeweils zu 4 Byte, vorgeleistet werden. Als eine weitere statische Vorleistung muß eine minimale Blockgröße definiert werden. Ausgehend von einer festen Größe eines Block-Headers, der die nötigen Verwaltungsdaten zu enthalten hat, erhält man für die minimale Blockgröße einen vernünftigen Wert, wenn man für die durch den Header verwalteten User-Daten mindestens noch einmal dieselbe Größe ansetzt. Für kleinere Blöcke wird ein Blocksplitting unterdrückt. Die kleinste unterstützte Einheit entspricht also gleichzeitig der Granularität, mit der überhaupt Blockgrößen angeboten werden.

Die größtmögliche Anzahl von Blockgrößen innerhalb eines Intervalls ergibt sich aus dem Verhältnis zwischen Intervallbreite und der minimalen Blockgröße.

Durch die Festlegung einer kleinsten Einheit und der damit verbundenen Granularität wird bei dem erfindungsgemäßen Speicherverwaltungssystem kein best-fit-Verfahren im strengen Sinne durchgeführt, weshalb das bei dem erfindungsgemäßen Speicherverwaltungssystem angewandte Zugriffsverfahren am besten als "quasi-best-fit-Verfahren" bezeichnet werden kann.

Die Festlegung einer kleinsten Einheit hat gegenüber dem best-fit-Verfahren jedoch einen enormen Vorteil. Solange es nicht sehr viele Anforderungen von Blöcken mit Längen, die kleiner als diese Einheit sind, gibt - und davon ist in der Praxis auszugehen -, wirkt diese Granularität de fakto lediglich dem Entstehen sehr kleiner, letztlich unbrauchbarer Blöcke entgegen. Dadurch ergibt sich ein wesentlich besseres Verhältnis zwischen belegtem und freiem Speicherraum.

Für jedes der oben eingeführten Intervalle wird Blatt-intern (Intervall-intern) gemäß den möglichen Blockgrößen jeweils ein weiterer statischer, semipermanenter binärer Baum (Unterbaum) vorgeleistet, der die zweite Ebene des binären Baumes bildet und unter einem (Intervall-)Blatt der ersten Ebene aufgehängt ist.

FIG 7 zeigt einen binären Unterbaum, der unter einem der (Intervall-)Blätter der ersten Ebene aufgehängt ist. Die Blätter dieses Baums enthalten eine zugeordnete Länge LENGTH, die die Obergrenze des Intervalls angibt, einen Verweis auf den Beginn (START_OF_CHN) bzw. das Ende (END_OF_CHN) einer Kette CHN von freien Blöcken der entsprechenden Größe und, um auf den Fall einer "leeren" Kette (START_OF_CHN=NULL) reagieren zu können, einen Verweis zum Nachbar-Blatt (NEXT_ENTRY) mit der nächsten Größe innerhalb dieses Intervalls bzw. zum Blatt des nächsthöheren Intervalls im übergeordneten binären Baum oder eine "letztes Intervall"-Marke. Die Knoten bestehen wiederum aus den schon oben beschriebenen, für binäre Bäume typischen Einträgen.

Geht man von einer Aufteilung der Intervalle in 2^{m} einzelne Ketten aus, so müssen für den Unterbaum 2^{m} - 1 Knoten der Größe 4 Byte und 2^{m} Blätter zu je 12 Byte vorgeleistet werden.

Soll während des Betriebs auf eine neue, dem Anwender angepaßte Unterteilung (z.B. schmale Intervalle in Bereichen hoher Anforderungshäufigkeit) umgestellt werden, so ist dies relativ unproblematisch, sofern die minimale Blocklänge beibehalten werden kann. Die neue Verwaltungsstruktur wird zunächst inaktiv, parallel zum Betrieb auf den alten Baumstrukturen vorbereitet. Ist diese Vorbereitung abgeschlossen, können die Verwaltungsdaten für den Reserveblock und die "großen" Blöcke aus der alten Verwaltungsstruktur in die neue Verwaltungsstruktur übernommen und diese aktiviert werden. Ab diesem Zeitpunkt ist der Betrieb mit der neuen Verwaltungsstruktur, wenn auch mit kurzzeitigen Dynamikeinbußen, möglich. Im weiteren Verlauf müssen nach und nach die über den alten Baum zugänglichen Ketten freier Blöcke in den neuen überführt werden. Diese Überführung wird wie folgt durchgeführt. Für einen bestimmten Zeitraum (Übergangsphase) wird bei einer Anforderung eines freien Blockes noch in der alten Verwaltungsstruktur gesucht. Nur wenn dort kein freier Block gefunden wird, wird in der neuen Verwaltungsstruktur weitergesucht. Wird in der alten Verwaltungsstruktur ein freier jedoch zu großer Block gefunden, so wird dieser gefundene Block gesplittet und der gesplittete Anteil von der neuen Verwaltungsstruktur aufgenommen. Wird ein bisher belegter Block freigegeben, so wird dieser selbstverständlich sofort von der neuen Verwaltungsstruktur aufgenommen. Nach Ablauf der Übergangsphase werden schließlich die noch in der alten Verwaltungsstruktur verbliebenen freien Blöcke in einem von den Anwenderanforderungen unabhängigen Prozeß in die neue Verwaltungsstruktur überführt. Mit Abschluß dieses Vorgangs ist der Wechsel auf die neue Verwaltungsstruktur vollzogen.

Im folgenden wird der Ablauf bei der Anforderung eines Blocks näher erläutert.

Auf eine Anforderung nach einem Block bestimmter Länge wird die Prozedur FIND_BLOCK aufgerufen. Diese Prozedur durchläuft unter zu Hilfenahme einer Prozedur FIND_ENTRY die erste Zugriffsstruktur, nämlich den beschriebenen binären Baum. Am entsprechenden Blatt des Hauptbaumes angekommen, wird die Anzahl der dort verfügbaren Blöcke ausgelesen. Ist diese Zahl ungleich Null (l > 0, so wird an die intervall-interne Verwaltung weitergegeben. Im anderen Fall (l = 0) wird auf das Nachbarintervall oder zu Optimierungszwecken - was später näher erläutert wird - auf ein anderes, für den Anwender günstiges Intervall verwiesen. Im folgenden werden die beiden genannten Fälle näher erläutert.

l > 0: Im intervall-internen Baum wird die entsprechende Größe herausgesucht (quasi-best-fit!). Wird unter diesem Blatt ein Block gefunden, so ist der Suchvorgang abgeschlossen. Ist unter diesem Blatt jedoch kein Block vorhanden, kann auf das Nachbarblatt innerhalb desselben Intervalls (oder zu Optimierungszwecken auf ein anderes Blatt) verwiesen werden, um so den nächstgrößeren Block zu finden. Falls auch alle weiteren Ketten leer sind, verweist das letzte Blatt des Intervalls auf den Einstieg in das nächste Intervall. Dort wird die erste Fallunterscheidung wiederholt, für l > 0 ist aber jetzt sicher, daß ein nutzbarer Block, der dann im allgemeinen zu splitten ist, gefunden wird.

l = 0: Da in diesem Intervall keine Blöcke vorliegen, kann direkt auf das nächste Intervall weiterverwiesen werden.

Um die oben skizzierte Entscheidung (l > 0 oder l = 0) zu ermöglichen, wäre es ausreichend, statt eines Zählers ein Bit vorzuleisten. Ein Zähler böte jedoch Vorteile bezüglich der Auditierung und statistischen Überwachung der Freiverwaltung.

Im besten Fall ist ein Block entsprechend der Anforderung (im Rahmen der vorgeleisteten Granularität!) - vorhanden, so daß der Zugriff schnell und direkt über den vorgeleisteten, statischen binären Baum erfolgen kann.

Der schlechteste Fall tritt ein, wenn ein Block angefordert wird, dessen Größe zweimal der Mindestgröße entspricht, und wenn zwar Blöcke der Mindestgröße vorhanden seien, jedoch ansonsten in der Freiverwaltung keine Blöcke mehr vorhanden sind (abgesehen vom genannten Reserveblock). Alle Intervall-Zähler, außer denen des ersten und des letzten Intervalls, stehen in diesem Fall somit auf Null.

Unter dieser Voraussetzung läuft die Anforderung in das erste Intervall und findet den Leereintrag im entsprechenden Blatt, woraufhin sie innerhalb des Intervalls über dessen gesamte Breite (- 2 Blätter) weitergereicht wird. An dessen Ende angekommen, erfolgt der Sprung zum Einstieg in das nächste Intervall. Da in diesem, wie auch in den folgenden, nach Voraussetzung keine Blöcke verfügbar sind, wird die Anforderung bis an das Ende des übergeordneten Baums (Hauptbaum) querverwiesen, um dann dort den Reserveblock zu finden und das entsprechende Stück abzusplitten.

Der normale Fall wird zwischen den genannten beiden Extremfällen liegen, allerdings ist es durch geeignete Maßnahmen (Vorgabe der Intervall-Schachtelung, Vorgabe einer Standardblockverteilung, gezieltes Splitting etc.) möglich, diesen Normalfall sehr dicht beim Idealfall zu halten.

Wird letztlich ein Blatt mit nicht leerer Kette gefunden, so wird am Beginn dieser Kette ein Block als reserviert markiert (PATTERN = "RESERVED"). Ist dieser Block nicht die VLP-Reserve, so wird im Falle einer Multitasking-Umgebung das Beschreiben des Blockes abgewartet ehe ein unter Umständen nötiges Splitting (SPLIT_BLOCK) erfolgt. Für die VLP-Reserve muß dies aber unverzüglich erfolgen, damit diese für weitere Anforderungen zur Verfügung steht. Der so gewonnene Block wird letztlich ausgegliedert, indem der Anfangszeiger des Blattes (START_OF_CHN) auf das folgende Blatt gesetzt, und der dortige Rückbezug und die Zähler in diesem und dem Intervall-Blatt geändert werden.

Bei der Freigabe eines Blocks werden zuerst die physikalischen Nachbarn des freizugebenden Blockes (PATTERN = "FREE") auf ihren Zustand untersucht. Ist einer der Nachbarn oder beide frei (PATTERN = "FREE"), so wird ein Block-Smelting ausgeführt (SMELT_BLOCK).

Für den danach freizugebenden Block wird über die oben beschriebenen Bäume das seiner Größe entsprechende Blatt gesucht. Dieses Suchen ist natürlich immer direkt erfolgreich. Das Eingliedern in die dortige Kette erfolgt an deren Ende unter Nutzung des Verweises END_OF_CHN in diesem Blatt. Die Zähler in den Blättern müssen analog hochgezählt werden.

Es sei darauf hingewiesen, daß das Suchen beim Freigeben eines Blockes als zusätzlicher Aufwand die notwendige Folge jeder vorgegebenen Ordnungsstruktur ist. Die Anzahl der Suchschritte ist bei dem erfindungsgemäßen Speicherverwaltungssystem jedoch besonders gering.

Im folgenden wird der dynamische Ablauf anhand eines Beispiels näher erläutert.

Als einfachste Verteilung wird ein gleichverteiltes Längenprofil betrachtet; die Obergrenze des Spektrums wird mit 256 kByte angenommen. Die Größe eines Block-Headers wird mit 16 Byte angenommen (Minimalausbau des Block-Headers, d.h. ohne PTR_NEXT_Phys und PTR_PREV_LOG wie in FIG 2), die minimale Blockgröße und damit auch die Granularität liegen also bei 32 Byte:

| | | |
|---|---|---|
| Lmax | 256 kByte | (Spektrum Obergrenze) |
| Lmin | 32 Byte | (minimale Blockgröße) |
| Gran | 32 Byte | (Granularität) |

Das Blocklängen-Spektrum soll in 256 äquidistante Intervalle der Breite 1 kB aufgeteilt werden, der Baum besitzt also eine Tiefe von acht Knoten; die Intervall-Breite 1 kB zusammen mit der Granularität 32 Byte ergibt 32 mögliche Längen pro Intervall, die Unterbäume sind also jeweils fünf Knoten tief:

| | | |
|---|---|---|
| IntB | 1 kByte | (Intervallbreite) |
| HBT | 8 | (Knotentiefe des Hauptbaums) |
| UBT | 5 | (Knotentiefe der Unterbäume) |
| NInt | 32 | (Anzahl der möglichen Längen pro Intervall) |

Damit ist der statisch vorgegebene Anteil der Freiverwaltung bekannt, nämlich ein Hauptbaum der Tiefe HBT=8 und 256 Intervall-interne Unterbäume der Tiefe UBT=5. Der vorzuleistende Platzbedarf beträgt ca. 130 kB:

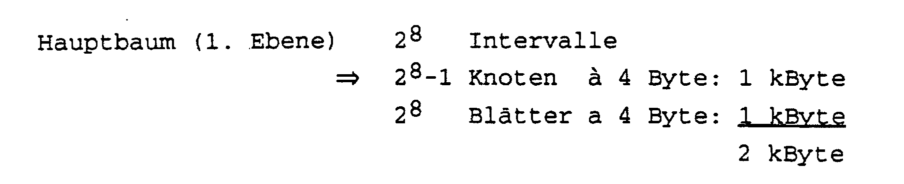

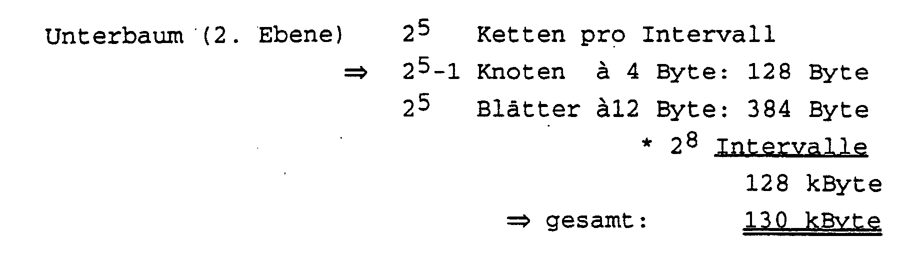

Im besten Fall findet man eine bestimmte Blockgröße also nach 13 Suchschritten, im schlechtesten Fall sind 334 Suchschritte erforderlich, was im folgenden nochmals verkürzt dargestellt wird.

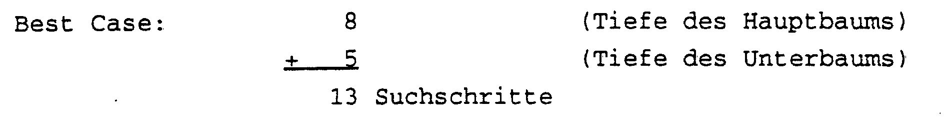

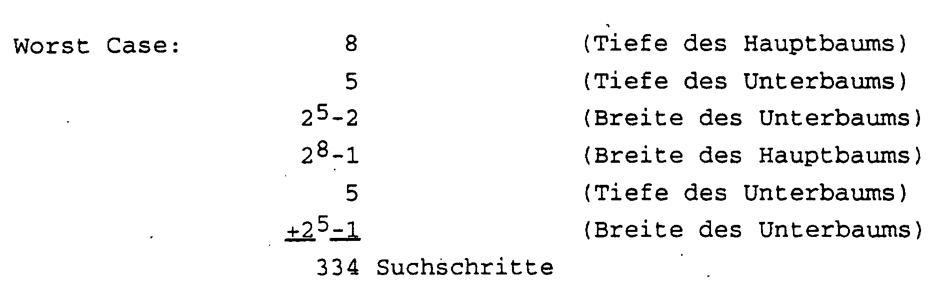

Der dargestellte Worst Case ist sicher sehr selten, weshalb die mittlere Suchzeit nahe bei dem Idealfall (13 Suchschritte) liegt.

Beim Freigeben eines Blocks muß dieser an das entsprechende Blatt der Freiverwaltung abgegeben werden. Im vorliegenden Beispiel sind hierzu 13 Suchschritte erforderlich.

Im folgenden werden verschiedene Mechanismen zur Optimierung der Suchzeiten bzw. Suchschritte dargestellt, die sich gegenseitig ergänzen.

Eine Strategie besteht darin, beim Finden einer leeren Kette nicht einfach auf den direkten Nachbarn zu verweisen, sondern so zu verweisen, daß nach einem zu erfolgenden Block-Splitting ein bezüglich der Ausgeglichenheit des Baumes günstiger Rest als freier Block übrig bleibt.

Für die konkrete Realisierung dieser Strategie kann beispielsweise am Ende der leeren Kette, statt auf die nächste Nachbarkette innerhalb eines Intervalls zu verweisen, direkt auf das nächste Intervall oder allgemeiner auf ein anderes Intervall verwiesen werden. Ebenso kann, anstatt eines folgenden Intervalls, direkt ein z.B. nach der applikationsspezifischen Verteilung ausgewähltes Blatt das Ziel eines solchen Verweises sein. Bei beiden Realisierungsformen ist gewährleistet, daß nach einem Block-Splitting wieder ein, je nach Intelligenz der Verweis-Struktur, brauchbarer Restblock zur Verfügung steht. Die genannte Strategie kann am besten als "look ahead splitting" bezeichnet werden.

Eine weitere Strategie besteht darin, daß ein Smelting von freien Blöcken mit ohnehin ständig angeforderten Blocklängen unterdrückt wird. Diese Strategie kann am besten als "look back splitting" bezeichnet werden.

Eine weitere Strategie besteht darin, relativ leere Ketten in einem von einzelnen Anforderungen (Transaktionen) unabhängigen Vorgang wieder aufzufüllen. Dieses transaktionsunabhängige Splitting kann vorzugsweise zu verkehrsarmen Zeiten, z.B. in der Nacht, durchgeführt werden, um so das Systemverhalten nicht zu beeinträchtigen. Eine konkrete Realisierung dieser Strategie besteht darin, daß zu einer die Blätter der zweiten Baumebene enthaltenden Tabelle eine transiente Schattentabelle zur Verfügung gestellt wird, die eine Zeitmarke der letzten Anforderung an.dieses Blatt und/oder einen Zähler für die enthaltenen Blöcke enthält. Scannt man diese Tabelle, so läßt sich anhand der Zeitmarke ablesen, wie häufig Blöcke einer bestimmten Größe genutzt werden und anhand des Zählers ob solche Blöcke noch in genügender Menge vorhanden sind. Soll die zu einem Blatt gehörige Kette wegen eines zu niedrigen Füllgrades aufgefüllt werden, so wird ein Block, der dem Vielfachen des gesuchten Blocks entspricht, in mehrere Teile zerlegt und die so entstandenen Teilblöcke in diese Kette eingehängt. (Der Füllgrad ist eine Größe, die das Verhältnis zwischen momentan vorhandener und statisch vorgegebener Anzahl von Blöcken beschreibt).

Die genannten Strategien verringern die Suchzeiten, da durch das gezielte Erzeugen bzw. Bestehenlassen häufig benötigter Blockgrößen die Wahrscheinlichkeit erhöht wird, eine Anforderung in der kürzest möglichen Suchzeit zu befriedigen.

Außerdem wird durch die genannten Strategien auch die Dynamik der Belegtverwaltung implizit erhöht, indem die mittlere Anzahl der Aktualisierungsvorgänge auf den Hintergrundpeicher pro Anforderung gesenkt werden. Diese Senkung ist auf die im Mittel geringere Anzahl von notwendigen Splittings zurückzuführen.

Der Effekt abnehmender Aktualisierungsvorgänge verstärkt sich insbesondere, wenn in einem einzigen Zuge aus einem größeren Block k kleinere Blöcke gleicher Größe erzeugt werden. Im folgenden wird der Effekt dieser Strategie im Vergleich zu den normalerweise auszuführenden k Splittings näher erläutert, wobei sich die in Klammern angegebene Zahl der Aktualisierungsvorgänge auf den Minimalausbau der Block-Headerstruktur und Blattstruktur bezieht.

Im Falle der normalerweise auszuführenden k Splittings wird bei jedem Aufruf der Prozedur SEIZE_BLOCK ein Splitting angestoßen. Dabei wird der Header des urspünglichen Blocks verändert (Pattern, Länge, usw.), dessen logischer Vorgänger und Nachfolger wird aktualisiert, ein neuer Header für den Restblock wird erzeugt, bezogen auf diesen Restblock muß der Rückbezug des physikalischen Nachfolgers geändert und der neue Block muß in die Freiverwaltung aufgenommen werden (logischer Vorgänger und Endezeiger der Freikette):

| | |
|---|---|
| alter Header | k |
| logischer Vorgänger | k |
| (logischer Nachfolger | k) |
| neuer Header | k |
| (physikalischer Nachfolger | k) |
| logischer Vorgänger | k |
| (Endezeiger Freikette | k) |
| Zahl der Aktualisierungsvorgänge | 7*k (4*k) |

Bei Anwendung der genannten Strategie wird dagegen ein großer Block in k kleinere Blöcke gleicher Größe zerlegt und anschließend erfolgen k SEIZE_BLOCK_Aufrufe, die dann ohne ein splitting auskommen. Beim Splitting des großen Blocks werden k neue Header erzeugt, insgesamt muß nur ein physikalischer Nachfolger aktualisiert werden; die gesamte Kette wird demselben Blatt zugeordnet, weshalb jeweils nur ein logischer Vorgänger bzw. Nachfolger geändert werden. Für die Seizes sind jeweils der entsprechende Header und die logischen Bezüge zu bearbeiten:

| | |
|---|---|
| neue Header | k |
| (physikalische Nachfolger | 1) |
| header | k |
| logischer Vorgänger | k |
| (logischer Nachfolger | k) |
| Zahl der Aktualisierungsvorgänge | 4*n + 1 (3*n) |

### Glossar für verwendete englische Ausdrücke und Abkürzungen:

- Access:: Zugang
- CHN:: Chain (Kette)
- ENTRY:: Eingang, Beginn
- FIND ENTRY:: finde den Beginn einer Kette von Blöcken
- FIND BLOCK:: finde einen Block
- GE_IX:: greater equal Index (größer-gleich Index)
- GET FROM IDLE:: nehme einen Block aus der Freiverwaltung
- IDLE:: frei
- ITV:: Intervall
- LEAF:: Blatt
- LENGTH:: Länge
- LOG:: logical (logisch)
- LT_IX:: lower than Index (niedriger-als Index)
- NEXT:: next (nächst, folgend)
- NODE:: Knoten
- Pattern:: Maske
- PHYS:: physical (physikalisch)
- PREV:: previous (vorhergehend)
- PTR:: Pointer (Zeiger)
- PUT TO IDLE:: unterstelle einen Block der Freiverwaltung
- Release:: freigeben
- Reserve:: reservieren
- Seize:: ergreifen
- Smelting:: Vereinigung
- Splitting:: Spaltung

## Patentansprüche

1. Speicherverwaltungssystem eines Rechnersystems, mit einer Verwaltungsstruktur(RIT), die den Freispeicher eines Rechnersystems in Form von Blöcken verwaltet und diese einem Anwendersystem auf Anforderung zur Verfügung stellt, wobei die Verwaltungsstruktur eine statische Baumstruktur mit Knoten umfaßt, und wobei ein Knoten der Baumstruktur ein ihm von dem übergeordneten Knoten vorgegebenes Spektrum von Blocklängen in Teilspektren unterteilt,
**dadurch gekennzeichnet, daß**
die jedem Knoten zugeordneten Spektren bzw. Teilspektren fest vorgegeben sind.

2. Speicherverwaltungssystem nach Anspruch 1,
**dadurch gekennzeichnet,**
**daß** es den Freispeicher in diskrete Blocklängen unterteilt, indem unter einem Endeknoten(Blatt) der genannten Baumstruktur jeweils nur Blöcke einer bestimmten diskreten Blocklänge verwaltet.

3. Speicherverwaltungssystem nach Anspruch 1 oder 2,
**dadurch gekennzeichnet,**
**daß** es sich bei der statischen Baumstruktur um eine binäre Baumstruktur handelt.

4. Speicherverwaltungssystem nach einem der Ansprüche 1 bis 3,
**gekennzeichnet durch**
einen Splitting-Mechanismus, der vor jeder Zuteilung eines gefundenen Blockes an ein Anwendersystem ein Block-Splitting durchführt, wenn der gefundene Block nicht die angeforderte Blocklänge aufweist,
einen Smelting-Mechanismus, der nach jeder von einem Anwendersystem erfolgten Freigabe eines Blockes überprüft, ob ein zu diesem Block physikalisch benachbarter Block ebenfalls frei ist und, sofern dies der Fall ist, beide Blöcke miteinander verschmelzt.

5. Speicherverwaltungssystem nach Anspruch 4,
**gekennzeichnet durch**
einen Verweisungsmechanismus, der bei Finden einer leeren Blocklänge für die weitere Suche auf das nächste Teilspektrum verweist.

6. Speicherverwaltungssystem nach Anpruch 4
**gekennzeichnet durch**
einen Verweisungsmechanismus, der bei Finden einer leeren angeforderten Blocklänge auf die k-fache Blocklänge verweist
und einen unter der k-fachen Blocklänge gefundenen Block vor der Zuteilung an das Anwendersystem in k Blöcke mit der angeforderten Blocklänge splittet.

7. Speicherverwaltungssystem nach einem der Ansprüche 1 bis 6, **gekennzeichnet durch**
eine Registriereinrichtung, die den Füllgrad einer Behälterstruktur zur Aufnahme der Blöcke einer bestimmten Blocklänge registriert und/oder die Anforderungshäufigkeit von Blöcken einer bestimmten Blocklänge registriert.

8. Speicherverwaltungssystem nach Anspruch 7,
**gekennzeichnet durch**
einen Auffüllmechanismus, der eine Behälterstruktur **durch** Block-Splitting wieder mit Blöcken auffüllt, wenn der Füllgrad eine bestimmte Schwelle unterschreitet.

9. Speicherverwaltungssystem nach Anspruch 7 oder 8
**gekennzeichnet durch**
einen Unterdrückungsmechanismus, der ein Smelting eines frei gegebenen Blocks mit einem physikalischen Nachbarblock unterdrückt, wenn der Füllgrad der zu dem freigegebenen Block gehörigen Behälterstruktur eine bestimmte Schwelle unterschreitet.

10. Speicherverwaltungssystem nach einem der Ansprüche 1 bis 9, **dadurch gekennzeichnet,**
**daß** die Unterteilung der Blocklängen in Teilspektren entsprechend der anwenderspezifischen Verteilung der Anforderungshäufigkeit einer bestimmten Blocklänge durchgeführt ist.

11. Speicherverwaltungssystem nach einem der Ansprüche 1 bis 10, mit
einem Belegtverwaltungssystem(UBM), das die von einem Anwendersystem belegten Blöcke verwaltet und dafür sorgt, daß für alle belegten Blöcke ein Abbild auf einem Hintergrundspeicher geführt wird.

12. Speicherverwaltungssystem nach einem der Ansprüche 1 bis 11, mit
Austauschmitteln, durch die die bisherige statische Verwaltungsstruktur während des Betriebs durch eine neue statische Verwaltungsstruktur ersetzt werden kann.

## Claims

1. Memory management system in a computer system, having a management structure (RIT) which manages the free memory in a computer system in the form of blocks and makes these blocks available to a user system on request, where the management structure comprises a static tree structure containing nodes, and where a node in the tree structure subdivides a spectrum of block lengths which is prescribed to it by the superordinate node into subspectra,
**characterized in that**
the spectra and subspectra associated with each node are firmly prescribed.

2. Memory management system according to Claim 1,
**characterized**
**in that** it subdivides the free memory into discrete block lengths by respectively managing only blocks of a particular discrete block length under an end node (leaf) in said tree structure.

3. Memory management system according to Claim 1 or 2,
**characterized**
**in that** the static tree structure is a binary tree structure.

4. Memory management system according to one of Claims 1 to 3,
**characterized by**
a splitting mechanism which, before a block which has been found is ever allocated to a user system, carries out block splitting if the block found does not have the requested block length,
a smelting mechanism which, whenever a block is released by a user system, checks whether a block which is physically adjacent to this block is likewise free and, if this is the case, fuses the two blocks together.

5. Memory management system according to Claim 4,
**characterized by**
a reference mechanism which, in the event of an empty block length being found, refers to the next subspectrum to continue searching.

6. Memory management system according to Claim 4,
**characterized by**
a reference mechanism which, in the event of an empty requested block length being found, refers to the k-tuple block length and splits a block found under the k-tuple block length into k blocks having the requested block length before allocation to the user system.

7. Memory management system according to one of Claims 1 to 6,
**characterized by**
a recording device which records the filling level of a container structure for holding the blocks of a particular block length and/or records the frequency with which blocks of a particular block length are requested.

8. Memory management system according to Claim 7,
**characterized by**
a filling mechanism which fills a container structure with blocks again by block splitting if the filling level falls below a particular threshold.

9. Memory management system according to Claim 7 or 8,
**characterized by**
a suppression mechanism which suppresses smelting of a released block to a physically adjacent block if the filling level of the container structure belonging to the released block falls below a particular threshold.

10. Memory management system according to one of Claims 1 to 9,
**characterized**
**in that** the block lengths are subdivided into subspectra on the basis of the user-specific distribution of the frequency with which a particular block length is requested.

11. Memory management system according to one of Claims 1 to 10, having
a use management system (UBM) which manages the blocks used by a user system and ensures that, for all used blocks, a map is held on a background memory.

12. Memory management system according to one of Claims 1 to 11, having
substitution means which allow the previous static management structure to be replaced with a new static management structure during operation.

## Revendications

1. Système de gestion de mémoire d'un ordinateur, comprenant une structure de gestion (RIT) qui gère la mémoire libre d'un ordinateur sous la forme de blocs et met ceux-ci à disposition d'un système utilisateur sur demande, la structure de gestion comprenant une structure arborescente statique avec des noeuds, et un noeud de la structure arborescente subdivisant en spectres partiels un spectre de longueurs de bloc qui lui est donné par le noeud de niveau supérieur, **caractérisé en ce que** les spectres resp. spectres partiels associés à chaque noeud sont définis de manière fixe.

2. Système de gestion de mémoire selon la revendication 1, **caractérisé en ce qu'**il subdivise la mémoire libre en longueurs de bloc discrètes en ne gérant à chaque fois, sous un noeud d'extrémité (feuille) de la structure arborescente mentionnée, que des blocs d'une longueur de bloc discrète déterminée.

3. Système de gestion de mémoire selon la revendication 1 ou 2, **caractérisé en ce que** la structure arborescente statique est une structure arborescente binaire.

4. Système de gestion de mémoire selon l'une des revendications 1 à 3, **caractérisé par**
un mécanisme de splittage qui, avant chaque attribution d'un bloc trouvé à un système utilisateur, exécute un splittage de bloc lorsque le bloc trouvé n'a pas la longueur de bloc demandée,
un mécanisme de fusion qui vérifie, à chaque fois qu'un bloc a été libéré par un système utilisateur, si un bloc physiquement voisin de ce bloc est également libre et qui fusionne les deux blocs si tel est le cas.

5. Système de gestion de mémoire selon la revendication 4, **caractérisé par** un mécanisme de renvoi qui, lorsqu'on trouve une longueur de bloc vide, renvoie pour la suite de la recherche au spectre partiel suivant.

6. Système de gestion de mémoire selon la revendication 4, **caractérisé par** un mécanisme de renvoi qui, lorsqu'on trouve une longueur de bloc demandée qui est vide, renvoie à la longueur de bloc correspondant à un multiple de k et procède, avant l'attribution au système utilisateur, au splittage en k blocs ayant la longueur de bloc demandée d'un bloc trouvé sous la longueur de bloc correspondant au multiple de k.

7. Système de gestion de mémoire selon l'une des revendications 1 à 6, **caractérisé par** un dispositif d'enregistrement qui enregistre le degré de remplissage d'une structure contenante destinée à recevoir les blocs ayant une longueur de bloc déterminée et/ou enregistre la fréquence de demande de blocs ayant une longueur de bloc déterminée.

8. Système de gestion de mémoire selon la revendication 7, **caractérisé par** un mécanisme de remplissage qui complète, par splittage de blocs, le remplissage d'une structure contenante avec des blocs lorsque le degré de remplissage passe sous un seuil déterminé.

9. Système de gestion de mémoire selon la revendication 7 ou 8, **caractérisé par** un mécanisme de suppression qui supprime la fusion d'un bloc donné libre avec un bloc physique voisin lorsque le degré de remplissage de la structure contenante en rapport avec le bloc libéré passe sous un seuil déterminé.

10. Système de gestion de mémoire selon l'une des revendications 1 à 9, **caractérisé en ce que** la subdivision des longueurs de bloc en spectres partiels est exécutée de manière correspondante à la répartition spécifique à l'utilisateur de la fréquence de demande d'une longueur de bloc déterminée.

11. Système de gestion de mémoire selon l'une des revendications 1 à 10, comprenant un système de gestion de mémoire occupée (UBM) qui gère les blocs occupés par un système utilisateur et fait en sorte que, pour tous les blocs occupés, une représentation soit faite sur une mémoire annexe.

12. Système de gestion de mémoire selon l'une des revendications 1 à 11, comprenant des moyens d'échange qui permettent de remplacer, pendant le fonctionnement, la structure de gestion statique existant jusqu'à présent par une nouvelle structure de gestion statique.
